# EUROPEAN PATENT SPECIFICATION

(11) **EP 4 473 162 B1**
(45) Date of publication and mention of the grant of the patent: **30.07.2025**
(21) Application number: 22854417.7
(22) Date of filing: 27.12.2022
(51) Int. Cl.: E01C 13/08

(54) **SYNTHETIC TURF SURFACE AND PRODUCTION PROCESS OF SAID SYNTHETIC TURF SURFACE**
KUNSTRASENFLÄCHE UND HERSTELLUNGSVERFAHREN FÜR KUNSTRASENFLÄCHE
SURFACE DE GAZON SYNTHÉTIQUE ET PROCÉDÉ DE PRODUCTION D'UNE SURFACE DE GAZON SYNTHÉTIQUE

(30) Priority: 31.01.2022 IT 202200001586; 22.06.2022 IT 202200013222
(43) Date of publication of application: 11.12.2024
(73) Proprietor: Polygreen SRL, 25015 Desenzano del Garda (IT)
(72) Inventor: DIAN, Brando, 25015 Desenzano del Garda (IT)
(74) Representative: Tirloni, Bartolomeo
(86) International application number: PCT/IT2022/050343
(87) International publication number: WO 2023/144847

(56) References cited:
- US-A1- 2007 248 773
- US-A1- 2012 279 125

## Description

### Technical field of the invention

The present invention relates to a synthetic turf surface comprising an infill layer comprising infill granules, and a production process of a synthetic turf surface.

### State of the art

In the realization of the surfaces for sport use (e.g., fields for soccer, American football, rugby, baseball, etc.) and/or for decorative use (e.g., gardens, playgrounds) typically a rigid and compact substrate is first prepared, for example made of clay or asphalt, on which is subsequently laid a synthetic turf mat, comprising artificial fibres that imitate natural grass. Furthermore, a layer of material, called infill (which can be made of various materials, such as rubber granulate, also recycled, sand, plant material such as cork and/or coconut, etc.), is typically spread on the synthetic turf mat among the artificial fibres. The infill structurally stabilizes the synthetic turf mat and/or improves its aesthetic quality, making it more similar to natural grass (since it helps keeping the artificial fibres upright), and/or facilitates its sport use, improving its performance properties (for example in terms of mechanical behaviour of the mat, rolling/bouncing of the ball, etc.).

The patents WO2008053389A1, EP2206833A1, US2010055461A1, US2018080183A1, US2015252537A1, and WO2006109110A1 disclose a respective infill material for a synthetic turf surface.

US 2007/248773 A1 and US 2012/279125 A1 disclose a synthetic turf surface in which roasted leather is used as organic material.

### Summary of the invention

The Applicant has considered that known infill materials have some drawbacks and/or can be improved under some aspects.

For example, the Applicant has observed that if the infill material has an insufficient degree of water retention, there may arise a risk of overheating of the synthetic turf mat (e.g., due to solar radiation) and/or an increase in the consumption of sprayed water. Conversely, if the infill material has an excessive degree of water retention, the infill material tends to soften, with possible consequent sudden damage thereof. In both the situations, there may therefore be damages of the infill material and/or of the synthetic turf mat, and/or a decrease in the comfort of use for the users. According to the Applicant, the aforementioned problem can occur both in case of infill materials entirely made of plant material (optionally mixed with sand or rubber) and in case of infill materials comprising composite granules comprising a vegetable filler, since the water retention properties of the infill material are strongly dependent on the properties of hygroscopicity (i.e., ability to absorb humidity present in the air) and/or hydrophilicity (i.e., ability to absorb water in liquid state, e.g., rainwater or water actively sprayed on the field) of the specific plant material used (as infill material or as filler of the composite granules). Therefore, the Applicant believes that the intrinsic hygroscopicity and/or hydrophilicity properties of the specific plant material may be unsuitable for providing the desired degree of water retention to the infill material.

The Applicant has also observed that some known infill materials, for example made entirely of plant material, may be inadequate to provide the desired performance properties to the synthetic turf surface. For example, if materials having a high hardness are used, there may be a rapid and/or accentuated damage to the synthetic turf surface and/or a high risk of injury for users (e.g., in the event of falls and/or slipping) due to the high abrasiveness of the infill material. Conversely, if soft and/or flaky materials are used, an excessive and/or rapid dimensional deformation and/or crushing of the infill material may occur when subjected to normal trampling stresses (e.g., a compression and/or a pulverization). This deformation can translate into an increase in the wear of the synthetic turf surface (e.g., since the compression leads to an increase in the portion of the artificial fibres that is left free and subjected to wearing during use of the surface) and/or a loss of the performance properties of the infill material (e.g., ability to absorb stresses with consequent increase in the risk of, e.g., joint, injuries) and/or a decrease in the comfort of use for the users (e.g., worsening of the sensation perceived by a user while trampling on the synthetic turf surface and/or worsening of the ball's bounce/rolling).

In this context, the Applicant has therefore faced the problem of realizing, through an economic and ecological production process, a granular infill material for a synthetic turf surface which gives the synthetic turf surface the desired aesthetic and/or performance properties (e.g., mechanical properties and/or water retention properties).

According to the Applicant, the aforementioned problem is solved by a synthetic turf surface, and a production process of a synthetic turf surface, according to the attached claims and/or having one or more of the following features.

According to an aspect, as set forth in claim 1, the invention relates to a synthetic turf surface comprising a synthetic turf mat and an infill layer arranged above said synthetic turf mat, wherein said infill layer comprises a top layer comprising granules entirely made of natural leather.

According to an aspect, as set forth in claim 7, the invention relates to a production process of a synthetic turf surface, wherein the process comprises:
- providing scraps of natural leather;
- grinding said scraps of natural leather for obtaining granules entirely made of natural leather;
- laying a synthetic turf mat;
- making an infill layer above said synthetic turf mat, wherein said infill layer comprises a top layer comprising said granules.

By "granules" it is meant fragments of natural leather having any shape (typically subject to variations, e.g. according to statistical distributions), for example a shape (typically irregular) generally globular and/or prismatic or fibrous (e.g. frayed), e.g., having a dimension ("length") much greater (e.g., at least five times, preferably at least ten times, greater) than at least one of (preferably both) the other two dimensions (width and thickness).

The Applicant has observed that the production of infill materials for a synthetic turf surface can advantageously take place through the use of natural leather, in particular scraps of natural leather (with advantages also under economic terms). The Applicant has in fact realized that the use of granules made entirely of natural leather (raw or tanned) in the top layer of the infill layer (i.e., in the topmost and exposed to the air and to the trampling layer) allows to confer the desired aesthetic and/or performance properties to the synthetic turf surface, as the aforementioned granules have the following properties.

An aesthetic appearance that recalls, in terms of texture and granulometry, the natural soil, making the use of the granules advantageous also in the synthetic turf surfaces for decorative use.

A limited abrasiveness which, during the use of the synthetic turf surface, allows to limit the risk of wear (and consequent damage) of the infill material and/or of the synthetic turf surface, and/or the risk of grazes and/or injuries to the users, for example in the event of falls and/or slips.

A low friction which helps to favour a rapid and/or regular sliding and/or rebound of the ball on the synthetic turf surface, to the full advantage of the comfort and/or regularity of play of the synthetic turf surface.

A mass density sufficient for limiting the floating of the granules, for example in the event of heavy rain or flooding of the synthetic turf surface, and/or the displacement of the granules in case of strong wind conditions. In this way, according to the Applicant, the granules stably maintain their position on the synthetic turf surface, limiting or avoiding their movement and/or their accumulation in the lateral areas of the synthetic turf surface. An adequate hygroscopicity and/or hydrophilicity due, as experimentally observed by the Applicant, to the fact that natural leather has a micro-structure similar to that of a very fine mesh woven fabric capable of trapping micro-droplets of water (or humidity). In this way it is possible to give the synthetic turf surface adequate water retention properties, limiting or avoiding the risk of overheating (and consequent deterioration) of the synthetic turf mat (for example due to solar radiation), and/or the risk of a decrease in the comfort of use for the users of the mat and/or the waste of water to spray the synthetic turf surface.

Further preferred embodiments are defined by the features of dependent claims 2-6,8-14.

Preferably said scraps are industrial scraps, preferably selected from the group comprising: non-compliant production batches of natural leather (e.g., which do not pass the quality tests), trims of natural leather, flaps of natural leather recovered from end-of-life articles, or combinations thereof. In this way it is possible to keep limited the production cost of the infill layer. In fact, the Applicant has observed that the purchase cost of the aforementioned scraps is very low, or substantially null, since for the producers of the articles from which the scraps derive, the disposal of the latter is a onerous operation both in terms of costs/disposal times and in terms of executive procedures that must be followed for the correct disposal. Therefore, these scraps are available from the aforementioned producers at very low or substantially zero costs, as they typically constitute a chore. Furthermore, the Applicant has observed that the recycling of waste materials favours a circular economy and/or the environmental protection (e.g., less pollution/waste of resources).

Preferably said scraps come from one or more of: tanning sector, automotive sector, clothing and fashion accessories sector, footwear sector. In fact, the Applicant has realized that large quantities of natural leather scraps are available in the aforementioned industrial sectors. Furthermore, the Applicant has realized that the natural leather scraps coming from the aforementioned industrial sectors, in particular from trims and/or end-of-life articles, have already been treated to come into contact with the human body, and therefore the impurity content (for example heavy metals and/or additives) has already been strongly reduced, or removed, during the industrial manufacturing process.

Preferably said natural leather is tanned leather, i.e. it has been subjected to a tanning process (e.g., in particular when coming from the aforementioned industrial sectors). In this way the granules maintain their aesthetic/performance properties over time. In fact, the Applicant has surprisingly observed that the granules (when they originate from tanned leather) have a behaviour similar to that of an inert material which allows to limit, or avoid, the proliferation of microorganisms onto the synthetic turf surface, during the use thereof. This limited proliferation of microorganisms allows to limit the granules from undergoing a process of decay which could cause a decrease and/or loss of performance properties. In fact, in the tanning process, the "raw" natural leather (i.e. the product of animal slaughter) is treated with a tanning agent (which chemically interacts with the collagen of the natural leather) in order to make the natural leather decay-proof (i.e., obtain the tanned leather).

Preferably providing said scraps of tanned natural leather comprises tanning raw natural leather with a tanning agent not comprising metal (preferably chromium). In this way the scraps do not contain impurities such as heavy metals (in particular chromium) resulting therefore safer for the environment and for the public health.

Preferably said tanning agent is selected among: vegetable tannins (e.g., chestnut, smoketree, sumac, quebracho, mimosa, and/or oak tannins), aldehydes (simple or complex), synthetic tannins (e.g., synthetic products that simulate the behaviour of vegetable tannins), sulphur-chlorides (typically in combination with alkalis, such as sodium carbonate), resins (e.g., synthetic polymers), oils (e.g., fish oil), minerals (e.g., aluminum oxide, zirconium, titanium oxide), or combinations thereof. In this way, obtaining the granules is simplified since the washing operations (see below) to eliminate toxic or dangerous impurities can be advantageously avoided.

Preferably said tanning agent is an aldehyde, more preferably selected from glutaraldehyde (or glutaric aldehyde, i.e., a short chain aliphatic dialdehyde), glyoxal (or ethandial), and amidodialdehyde, even more preferably glutaraldehyde. The Applicant has realized that the leather tanned with aldehydes (and in particular glutaraldehyde) lends itself well for being used in the infill layer of the present invention and makes the relative process for obtaining the granules particularly cheap and safe.

In an alternative embodiment said tanning agent comprises a metal, preferably chromium (in particular in the form of salts, or compounds, of trivalent chromium, for example dichrome trioxide, chromium sulphate, etc.). The Applicant has realized that the natural leather tanned with chromium is used in various industrial sectors and therefore a large quantity of scraps of natural tanned leather is available, to the full advantage of the simplicity and/or economy of obtaining the granules.

Preferably said tanned natural leather is free of dyeing pigments (with the exception of tanning agents, in the case in which the latter also produce a dyeing effect). Preferably said tanned natural leather has not undergone any dyeing process (additional to the tanning or retanning treatment), i.e., a treatment to impart a desired colour to the tanned leather. In other words, the scraps of tanned natural leather are scraps of an intermediate semi-finished product of the preparation process of the tanned natural leather, such semi-finished product resulting wet from the tanning process (or retanning, where applicable) and not having yet been subjected to dyeing in drum, and preferably not even to one or more of the typical treatments subsequent to the (first) tanning, such as pressing, splitting, shaving, retanning, fatliquoring and needle punching. For example, said scraps of tanned natural leather are scraps of leather known in the jargon as "wet white" (in case of metal-free tanning) or "wet blue" (in case of chrome tanning). In this way it is not necessary to select the scraps of tanned natural leather according to their colour before grinding them. Preferably said scraps comprise industrial scraps of two or more types of natural leather different from each other, i.e. said scraps are heterogeneous. In other words, a nature (e.g., the animal from which the natural leather comes) and/or a treatment (e.g., a tanning process in the absence, or in the presence, of metals, e.g., chromium oxide, varnishing, lacquering, etc.) of a first sub-group of scraps respectively differs from a nature and/or a treatment of a second sub-group of scraps. The Applicant has in fact experimentally verified that it is possible to obtain the desired aesthetic/performance properties also starting from heterogeneous scraps, for example coming from different industrial sectors. The Applicant has realized that the use of the aforementioned heterogeneous scraps allows for the reduction of the scraps sorting operations which result to be onerous in terms of consumed time and/or employed personnel.

Preferably it is provided, subsequently to said grinding, dedusting said ground scraps (e.g., the fragments of natural leather obtained from the grinding are conveyed inside a silo comprising an aspirating device for removing the cutting dust).

In one embodiment (in particular in case of tanning with metals) it is provided, preferably subsequently to said grinding, even more preferably subsequently to said dedusting, washing (preferably in water and/or in hot conditions) said scraps of natural leather (preferably ground and more preferably dedusted). In this way, it is possible to reduce, or eliminate, the presence of any impurities (e.g., heavy metals, such as chromium oxide, and/or additives) which may be due to the manufacturing process of the sector from which the scraps come from. In particular, performing the washing after the grinding allows to expose a greater surface area of the granules to the full advantage of more accurate elimination of the aforementioned impurities.

Preferably subsequently to said washing said scraps of natural leather, it is provided drying said washed (and preferably ground) scraps of natural leather.

In one embodiment (in particular in case of metal-free tanning), it is provided not washing said scraps of (tanned) natural leather. In fact, advantageously, metal-free tanning makes subsequent washing unnecessary.

Preferably said scraps of natural leather are scraps of wet (tanned) natural leather, more preferably with a water content of at least 40% of a total weight (for example when the scraps are the aforementioned "wet white" or " wet blue", or subsequently to the washing and before the grinding).

In one embodiment, providing scraps of (tanned) natural leather comprises providing scraps of wet (tanned) natural leather, and it is further provided drying said scraps of wet (tanned) natural leather, wherein said grinding said scraps of natural leather comprises grinding said scraps of dried (tanned) natural leather. The Applicant has found that under certain conditions it is advantageous to grind the dried leather, for example in terms of simplicity and/or speed of the process (e.g., machines having less power can be used) and/or in terms of quality of the grinding (e.g., cutting efficiency).

In one embodiment, said grinding said scraps of (tanned) natural leather comprises grinding said scraps of wet (tanned) natural leather, and furthermore it is provided, subsequently to said grinding said scraps of wet (tanned) natural leather, drying said scraps of wet (tanned) natural leather. The Applicant has found that under certain conditions it is advantageous to grind the wet leather, for example in terms of simplicity and/or speed of the process (e.g., the drying times can be reduced) and/or in terms of quality of the grinding (e.g., less cutting dust is formed).

Preferably said grinding said scraps of natural leather is performed by conveying them into one or more grinding mills in which, for example, there is a respective system of blades and counter-blades. Preferably said blades are mobile (e.g., rotating or oscillating) and said counter-blades are fixed (e.g., integral with a body of said mill), or vice versa. The use of mills with blade and counter-blade, which exploit the principle of grinding by cutting and not by impact, allows to obtain a clean cut of the scraps of natural leather (not fragile by its very nature), limiting or preventing the presence of fraying. Preferably the grinding mill comprises a grate (e.g. made of perforated metal sheet) for controlling the granulometry.

Preferably said granules have a sieve size (typically subject to variations, e.g. according to statistical distributions) greater than or equal to 0.3 mm, more preferably greater than or equal to 0.5 mm, and/or less than or equal to 3.5 mm, more preferably less than or equal to 3 mm. Preferably subsequently to said grinding, preferably subsequently to said dedusting, more preferably subsequently to said washing, it is provided sieving said ground scraps (preferably dedusted and more preferably washed) for obtaining said granules having a sieve size within the aforementioned range.

Preferably said top layer has a mass per unit area greater than or equal to 1 kg/m², more preferably greater than or equal to 3 kg/m², even more preferably greater than or equal to 5 kg/m², even more preferably greater than or equal to 8 kg/m², and/or less than or equal to 10 kg/m², more preferably less than or equal to 8 kg/m², even more preferably less than or equal to 6 kg/m². In this way, the appropriate quantity of material is provided in order to provide the desired aesthetic/performance properties.

Preferably said top layer has an (average) thickness greater than or equal to 5 mm, more preferably greater than or equal to 8 mm, and/or less than or equal to 35 mm, more preferably less than or equal to 30 mm, still more preferably less than or equal to 25 mm. Preferably said top layer is entirely made of said granules. In this way, it is possible to optimize the aforementioned aesthetic/performance properties of the synthetic turf surface.

In an alternative embodiment, said top layer is entirely made of a mixture comprising said granules and a further granular infill material (preferably other than said natural leather, for example entirely of plant material such as olive pits). Preferably, in said top layer (e.g. in said mixture), a (percentage) weight content of said granules is greater than or equal to 20%, more preferably greater than or equal to 30%, even more preferably greater than or equal to 40%, and/or less than or equal to 90%, more preferably less than or equal to 80%. In this way it is possible to provide a weight content of said granules sufficient to provide the aforementioned aesthetic/performance properties.

Preferably said infill layer comprises a lower layer arranged below said top layer, more preferably in direct contact with a support sheet of said synthetic turf mat.

Preferably said lower layer comprises (preferably consists of) further granules made of material other than said natural leather. In this way the different layers of the infill layer perform a specific function during the use of the synthetic turf surface.

Preferably said further granules have a sieve size less than or equal to 1 mm, more preferably less than or equal to 0.8 mm, and/or greater than or equal to 0.3 mm. In this way, the further granules have a sieve size such as to confer the desired properties (typically stabilizing) to the synthetic turf surface.

Preferably said further granules are entirely made of: sand, plant material (e.g., cereal shells/peels, rice husk, cork, wood shavings, flax, jute, pulverized coconut, etc.), or combinations thereof. In this way it is possible to limit the overall cost of the infill layer since the aforesaid materials are easily retrievable and available in large quantities (or constitute waste materials, as in case of plant materials). More preferably said further granules are entirely made of sand. In this way it is possible to effectively stabilize the synthetic grass mat as the sand has a high density.

Preferably said lower layer has a mass per unit area greater than or equal to 8 kg/m², more preferably greater than or equal to 10 kg/m², and/or less than or equal to 30 kg/m², more preferably less than or equal to 25 kg/m². In this way the lower layer can advantageously provide the desired properties (for example stabilizing).

Preferably said lower layer has an (average) thickness greater than or equal to 3 mm, more preferably greater than or equal to 5 mm, and/or less than or equal to 30 mm, more preferably less than or equal to 25 mm, even more preferably less than equal to 20mm. In an alternative embodiment said infill layer comprises only said top layer (i.e. it consists solely of said top layer, since there is no infill layer inferiorly arranged).

Preferably making said infill layer comprises:
- arranging said further granules (directly) above said synthetic turf mat for making said lower layer; and
- arranging said granules (directly) above said further granules for making said top layer. Preferably said infill layer consists only of said top layer and said lower layer. Preferably said synthetic turf surface comprises only artificial fibres (i.e., synthetic grass). In other words, the synthetic turf surface does not include any blades of natural grass.

### Brief description of the drawings

Figure 1 shows schematically and in cross-section a synthetic turf surface comprising an infill layer according to the present invention;
figure 2 shows a block diagram of some steps of the production process of a synthetic turf surface according to the present invention;
figure 3 shows a block diagram of some steps of the production process of a synthetic turf surface according to a further embodiment of the present invention;
Figure 4 shows a block diagram of some steps of a natural leather tanning process.

### Detailed description of some embodiments of the invention

The features and the advantages of the present invention will be further clarified by the following detailed description of some embodiments, presented by way of non-limiting example of the present invention, with reference to the attached figures.

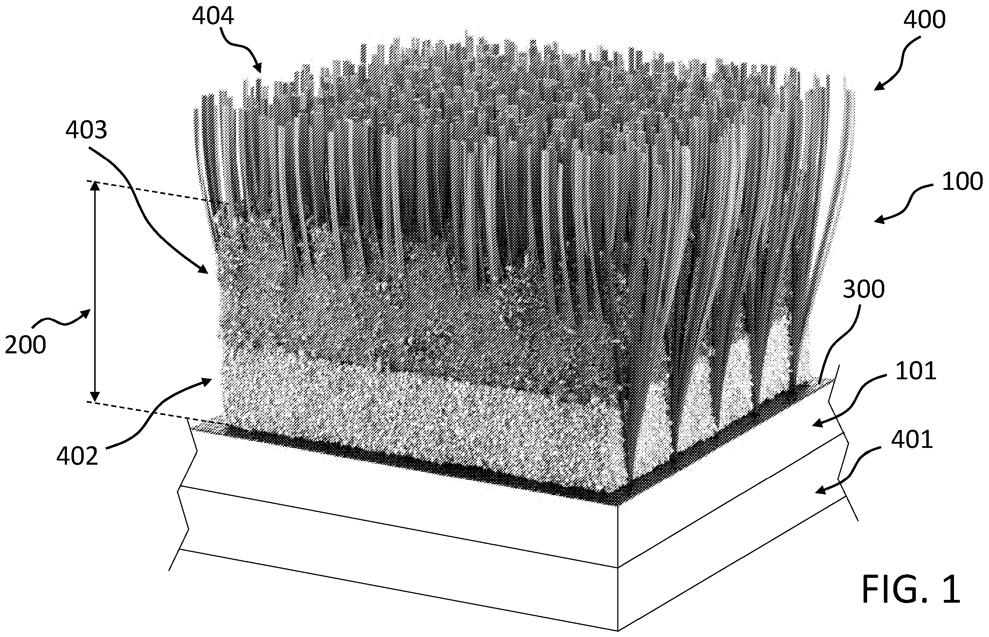

With reference to figure 1, it is schematically shown a synthetic turf surface 400 comprising a compact substrate 401, for example made of clay, (for example as known) and a synthetic turf mat 100 (for example of known type and not described in detail) laid onto the substrate 401. Optionally, a dampening layer 101 is interposed between the substrate 401 and the mat 100. Typically, the synthetic turf mat 100 comprises a plurality of artificial fibres 404 (which simulate natural grass blades) to example woven by tufting into a support sheet 300 of the synthetic turf mat 100. Exemplarily the synthetic turf surface 400 does not comprise natural grass blades, i.e., the surface 400 is not a mixed surface (i.e., comprising both artificial fibres and blades of natural grass).

The synthetic turf surface 400 also comprises an infill layer 200 arranged onto the synthetic turf mat 100, in particular between the artificial fibres 404.

Exemplarily the infill layer 200 comprises a lower layer 402, for example entirely made of granules, for example of sand. Exemplarily the grains of sand have sieve size (e.g., according to the EN 933-1 standard) within the range of 0.3-0.8 mm.

Exemplarily the lower layer 402 has an (average) thickness equal to about 15 mm and a mass per unit area exemplarily equal to 16 kg/m².

The infill layer 200 comprises a top layer 403, exemplarily entirely made of granules 201 made entirely of natural leather (shown schematically in figure 1). Exemplarily the granules 201 have sieve size (e.g., according to the EN 933-1 standard) within the range 0.8-2.5 mm.

Exemplarily the top layer 403 has an (average) thickness equal to about 20 mm and a mass per unit area exemplarily equal to 6 kg/m². In use, it may happen that the lower 402 and top layer 403 at least partially mix.

In an alternative embodiment the top layer 403 is exemplarily constituted by a heterogeneous mixture comprising the granules 201 and a further granular infill material (for example in the proportion 50/50, or 60/40, or 70/30, by weight), e.g. homogeneously mixed. For example, the further granular infill material may be one or more of: granules entirely made of plant material (e.g., olive pits, pine cones, coconut fibre/peat, cork, rice husk, banana fibre/peat, lignin, cellulose, wood sawdust, defibrations of tree plants, hemp, or combinations thereof), composite granules (as described for example in EP3452660A1 by the same Applicant), fragments (or granules) from waste materials, such as wallpaper, tires, artificial leather, or combinations thereof. Preferably the further granular material consists of granules entirely made of plant material, such as for example olive pits. For example, the mixture comprises a weight content of granules 201 equal to about 70% and a weight content of granules entirely made of olive pits equal to about 30%.

Exemplarily the infill layer 200 consists only of the aforementioned top layer 403 and lower layer 402, with the lower layer 402 which has stabilizing function (e.g., it provides stability to the mat and keeps the artificial fibres in an upright position) and the top layer 403 which has the function of providing the aesthetic/performance properties to the surface 400 (e.g., similarity to natural grass, shock absorption, ball rolling and/or rebound, comfort of use, water retention).

Exemplarily the synthetic turf surface 400 is produced by first preparing the substrate 401, and subsequently by laying the synthetic turf mat 100 on the latter. Finally, the grains of sand are first arranged directly above the support sheet 300 to make the lower layer 402, and subsequently the granules 201 directly above the grains of sand to make the top layer 403.

It is noted that the top layer can also be obtained by arranging (above the lower layer or directly on the sheet 300) firstly a layer comprising or (substantially) consisting of said granules 201 and then a layer (typically thin) of further infill material (devoid of granules 201). In this way, during use, following the natural mixing between the layer with the granules 201 and the layer of further infill material, the top layer according to the present invention is made.

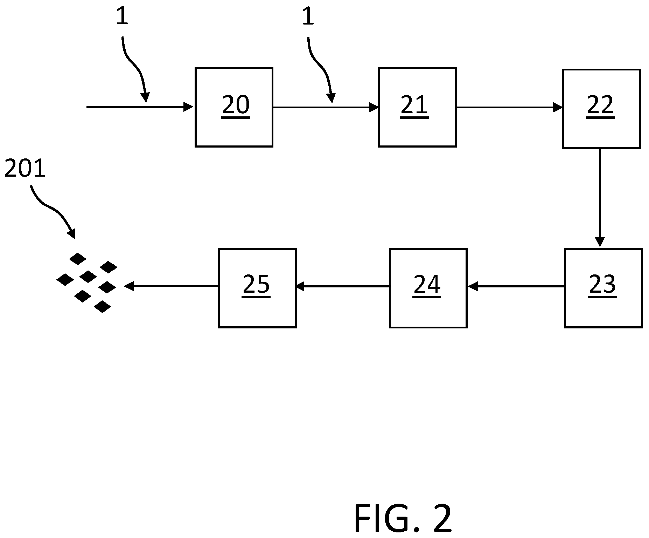

With reference to figure 2, it is exemplarily represented an example of the production step of the granules 201, used to make the top layer 403 of the infill layer 200.

Initially, the process provides for providing 20 (for example collecting in special containers) scraps 1 of natural leather, e.g. hides, cowhide, etc.

Exemplarily the scraps 1 are one or more of: scraps deriving from trimming in the production of natural leather pieces and/or deriving from cutting of shapes from natural leather pieces during the production of natural leather articles, natural leather production batches which do not pass quality tests, flaps of natural leather recovered from end-of-life articles.

Exemplarily the scraps 1 are heterogeneous, for example they come from several industrial sectors, e.g., automotive sector (e.g., interior trimming parts of high-end vehicles), clothing and fashion accessories sector (e.g., jackets, belts, bags, pochettes, wallets, briefcases, suitcases, etc.), footwear sector (e.g., upper, tongue, quarter, throat and/or heel/toe area of shoes/boots).

It is noted that the scraps 1 can be advantageously selected according to their colour, in order to obtain granules having a desired aesthetic appearance for decorating the synthetic turf surface.

Exemplarily the scraps 1 have been subjected to a tanning process during the previous industrial processing, for example performed with chromium oxide (or alternatively with vegetable tannins).

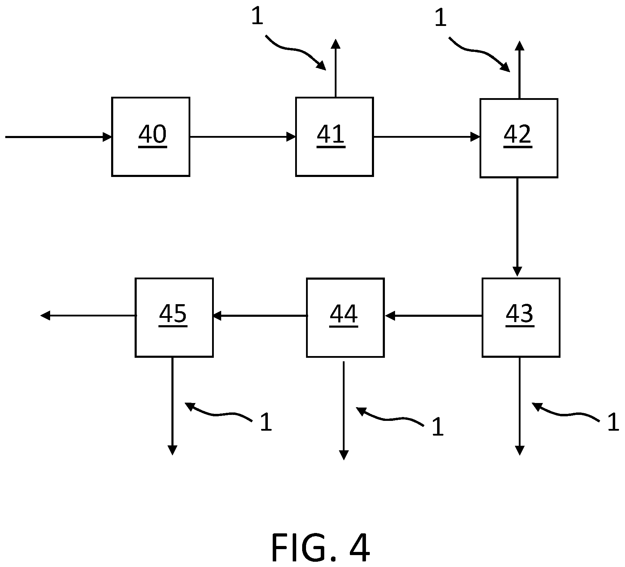

Figure 4 schematically shows an example of a tanning process.

In a first step 40, the leathers, which typically comes from slaughterhouses, are subjected to treatments which prepare the leather to receive the tanning substances, for example one or more of: desalting (for the leathers treated with salt), soaking, depilation, liming performed in the drums, mechanical operations of fleshing (elimination of residues of meat and tissue still attached to the leather), trimming (which eliminates superfluous parts to give a defined outline to the edge of the leather), shaving, and splitting (separation of the leather into typically two layers, called "flower" and "crust", or even in three layers). Subsequently the leather undergoes 41 the actual tanning treatment, i.e. the immersion in a solution with the tanning agents, typically in drum (in one or more phases, referred to in the jargon as "retanning"), which stabilize the leather, which from putrescible material becomes decay-proof.

Typically, one or more of the operations 42 of pressing, splitting (if not performed before tanning), trimming (even if performed before tanning) and/or shaving (to equalize the thickness of the leathers, e.g. passing the leathers through a machine equipped with rotating cylinders equipped with blades) are subsequently performed. The leather so tanned in the jargon is called "wet blue", if tanned with chromium, or "wet white", if tanned without chromium (e.g., with vegetable/synthetic tannins, aldehydes, sulphur-chlorides, resins, oils, or minerals).

Subsequently the leather is subjected to dyeing 43 to give the desired colour and, typically, to the fatliquoring.

It is then provided the drying phase 44 (e.g., vacuum drying, air drying, drying on a rapier frame, etc.). The dried leathers are known in the jargon as "crust leathers".

In the final finishing stage 45 one or more of the following operations are performed: spraying of pigments, protective resins and waxes, ironing and buffing (to give the leather softness and shine). The finished leathers are selected and then destined to various markets, from furniture to footwear, from clothing to leather goods.

The present invention contemplates the use of scraps of tanned leather 1, as indicated by the respective arrows in figure 4, obtained immediately downstream of the tanning 41 (i.e. downstream of a tanning step in drum) and/or immediately downstream of the subsequent operations 42 of shaving, trimming or possibly splitting, and in any case preferably when the leather has not yet been subjected to dyeing 43. In this way the colour of the scraps is uniform (bluish, in the case of tanning with chrome, or whitish, in case of chrome-free tanning) and a selection according to the colour of the scraps is not required, and furthermore the leather has a lower content of potentially contaminating agents for the environment. Such scraps can be in the form of whole leathers (or its sublayers, such as the flower or more often the crust obtained from the splitting) that do not comply with quality standards, or of leather residues obtained from shaving, trimming or splitting operations.

The present invention also contemplates the use of scraps of natural leather 1 obtained directly downstream of the dyeing 43 (and possibly fatliquoring) operations, drying 44 and finishing 45 (i.e. the finished products of the tanning process but not compliant). In this case, the aforementioned step of selecting/subdividing the scraps 1 according to their colour is typically performed, for example substantially in conjunction with the collection 20 of the scraps 1 (as described above).

Returning to the process of figure 2, once collected, the scraps 1 are ground 21 by conveying them inside one or more grinding mills in which, for example, there is a respective system of blades and counter-blades (for example of known type).

After grinding, the ground natural leather is conveyed (for example by means of a screw conveyor) inside a silo comprising an aspiration device (for example an aspiration cyclone of known type) to remove 22 the cutting dust (e.g., the fibrous and volatile part produced during grinding).

Once the removal of the cutting dusts has been completed, the ground and dedusted leather is washed 23 with hot water (for example at temperature equal to about 40-50°C for a time interval equal to about 10 minutes), for example inside one or more industrial washing machines, in order to eliminate any traces of impurities (in particular the chromium oxide present in the tanned leather) and dried 24, for example by depositing (for a time interval equal to about 2-5 minutes ) of the washed leather on a belt with hot air (for example at temperature equal to about 60-70°C).

In case of scraps 1 of natural leather tanned without metals, for example with glutaraldehyde, the aforementioned washing and drying steps can be avoided or substantially reduced.

Finally, the leather thus treated is subsequently fed (for example via a further transport screw) into a sieving device (for example a vibrating sieve with superimposed sieves in which there are a plurality of openings having different dimensions) which allows the sieving 25 according to the sieve size to finally obtain the granules 201 having the desired dimensions.

Finally, the granules 201 can be packaged in special bags (for example of volumetric capacity of about 2 m³) to be transported to the realization site of the synthetic turf surface 400.

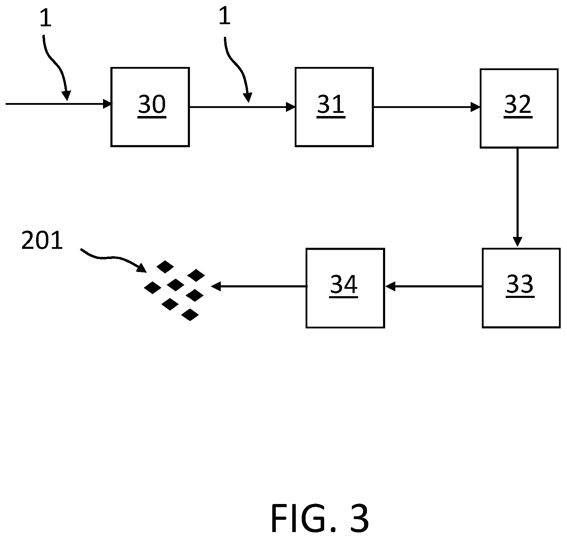

With reference to figure 3, a further example of the production of granules 201 is schematically represented, comprising providing 30 (for example collecting in special containers) scraps 1 of natural leather, where scraps 1 are "wet white" scraps (e.g. subjected to a tanning process with glutaraldehyde) or "wet blue" (e.g. tanned with chromium), i.e. scraps obtained directly downstream of the tanning treatment 41 and/or downstream of the pressing, splitting, trimming and/or shaving operations 42. Such scraps are exemplarily collected while still impregnated with the liquid tanning solution, and therefore resulting wet at the beginning of the granules production process.

Once collected, the scraps 1 are exemplarily dried 31, for example by depositing (for a time interval equal to about 2-5 minutes) on a belt with hot air (for example at a temperature equal to approximately 60-70°C). Once dried, the dried scraps 1 are ground 32 by conveying them inside one or more grinding mills as described above. The Applicant has realized that it is advantageous to first dry and then grind the wet-white or wet-blue scraps of natural leather since the dried scraps assume a consistency similar to that of cardboard which facilitates their shredding.

Alternatively (not shown), it is also possible to grind the wet scraps and, subsequently, dry the ground scraps 1. In this way, for example, it is possible to reduce the drying times of the scraps (since, as the scraps are ground, a greater free surface is exposed) and/or to reduce the amount of cutting dust produced in the grinding.

Once the grinding 32 is complete, the cutting dust 33 is removed from the ground and dried natural leather, for example as described above.

In case of wet-blue, the leather is also washed (not shown) using hot water for example as described above with reference to figure 2. The washing can take place at any step of the process of figure 3, for example, in case of grinding with dried leather, before drying 31 or after dedusting 33 (in this case a further drying step is required after washing), or, in case of grinding with wet leather, before grinding or after grinding but before drying.

The ground, dedusted and dried leather is finally subjected to sieving 34 and bagging as described above.

## Claims

1. Synthetic turf surface (400) comprising a synthetic turf mat (100) and an infill layer (200) arranged above said synthetic turf mat (100), **characterized in that** said infill layer (200) comprises a top layer (403) comprising granules (201) entirely made of natural leather.

2. Surface (400) according to claim 1, wherein said natural leather is tanned leather.

3. Surface (400) according to claim 1 or 2, wherein said top layer (403) is entirely made of said granules (201).

4. Surface (400) according to claim 1 or 2, wherein said top layer (403) is entirely made of a mixture comprising said granules (201) and a further granular infill material other than said natural leather, a weight content of said granules (201) in said top layer (403) being greater than or equal to 20% and less than or equal to 90%.

5. Surface (400) according to any one of the preceding claims, wherein said granules (201) have a sieve size greater than or equal to 0.3 mm and less than or equal to 3.5 mm, wherein said top layer (403) has a mass per unit area greater than or equal to 1 kg/m² and less than or equal to 10 kg/m², wherein said top layer (403) has a thickness greater than or equal to 5 mm and less than or equal to 35 mm.

6. Surface (400) according to any one of the preceding claims, wherein said infill layer (200) comprises a lower layer (402) arranged below said top layer (403), wherein said lower layer (402) comprises further granules entirely made of: sand, plant material, or combinations thereof, wherein said lower layer (402) has a mass per unit area greater than or equal to 8 kg/m² and less than or equal to 30 kg/m², and wherein said lower layer (402) has a thickness greater than or equal to 3 mm and less than or equal to 30 mm.

7. Production process of a synthetic turf surface (400), wherein the process comprises:
- providing (20; 30) scraps (1) of natural leather;
- grinding (21; 32) said scraps (1) of natural leather for obtaining said granules (201) entirely made of natural leather;
- laying a synthetic turf mat (100);
- making an infill layer (200) above said synthetic turf mat (100), wherein said infill layer (200) comprises a top layer (403) comprising said granules (201).

8. Process according to claim 7, wherein said scraps are industrial scraps selected from the group comprising: trims of natural leather, non-compliant production batches of natural leather, flaps of natural leather recovered from end-of-life articles, or combinations thereof, and wherein said scraps come from one or more of: tanning sector, automotive sector, clothing and fashion accessories sector, footwear sector.

9. Process according to claim 7 or 8, wherein said natural leather is tanned leather.

10. Process according to claim 9, wherein providing said scraps (1) of tanned natural leather comprises tanning raw natural leather with a tanning agent selected among: vegetable tannins, aldehydes, synthetic tannins, sulphur-chlorides, resins, oils, minerals, or combinations thereof, preferably glutaraldehyde.

11. Process according to claim 9 or 10, wherein providing said scraps (1) of tanned natural leather comprises providing scraps of wet natural leather, wherein said tanned natural leather has not undergone any dyeing process.

12. Process according to claim 11 comprising:
- drying (31) said scraps of wet natural leather, wherein said grinding (32) comprises grinding said scraps of dried natural leather,
or wherein said grinding (32) comprises grinding said scraps of wet natural leather, and wherein the process further comprises, after said grinding, drying said scraps of wet natural leather.

13. Process according to any one of claims 7-12 comprising, subsequently to said grinding (32):
- dedusting (33) said ground scraps; and
- subsequently, sieving (34) said ground and dedusted scraps for obtaining said granules (201).

14. Process according to anyone of claims 7-13, wherein making said infill layer (200) comprises:
- arranging further granules made of a material other than said natural leather above said synthetic turf mat (100) for making a lower layer (402) of said infill layer (200); and
- arranging said granules (201) above said further granules for making said top layer (403).

## Patentansprüche

1. Kunstrasenoberfläche (400), umfassend eine Kunstrasenmatte (100) und eine Verfüllschicht (200), angeordnet über der genannten Kunstrasenmatte (100), **dadurch gekennzeichnet, dass** die genannte Verfüllschicht (200) eine Oberschicht (403) umfasst, die Granulatkörner (201) umfasst, die vollständig aus natürlichem Leder bestehen.

2. Oberfläche (400) gemäß Anspruch 1, wobei das genannte natürliche Leder gegerbtes Leder ist.

3. Oberfläche (400) gemäß Anspruch 1 oder 2, wobei die genannte Oberschicht (403) vollständig aus den genannten Granulatkörnern (201) besteht.

4. Oberfläche (400) gemäß Anspruch 1 oder 2, wobei die genannte Oberschicht (403) vollständig aus einem Gemisch besteht, das die genannten Granulatkörner (201) und ein weiteres körniges Verfüllmaterial, verschieden von dem genannten natürlichen Leder, umfasst, wobei ein Gewichtsanteil der genannten Granulatkörner (201) in der genannten Oberschicht (403) größer als oder gleich 20 % und kleiner als oder gleich 90 % ist.

5. Oberfläche (400) gemäß einem der vorhergehenden Ansprüche, wobei die genannten Granulatkörner (201) eine Siebgröße größer als oder gleich 0,3 mm und kleiner als oder gleich 3,5 mm aufweisen, wobei die genannte Oberschicht (403) eine Flächenmasse größer als oder gleich 1 kg/m² und kleiner als oder gleich 10 kg/m² aufweist, wobei die genannte Oberschicht (403) eine Dicke größer als oder gleich 5 mm und kleiner als oder gleich 35 mm aufweist.

6. Oberfläche (400) gemäß einem der vorhergehenden Ansprüche, wobei die genannte Verfüllschicht (200) eine Unterschicht (402) umfasst, die unter der genannten Oberschicht (403) angeordnet ist, wobei die genannte Unterschicht (402) weitere Granulatkörner umfasst, die vollständig aus Sand, Pflanzenmaterial oder Kombinationen davon bestehen, wobei die genannte Unterschicht (402) eine Flächenmasse größer als oder gleich 8 kg/m² und kleiner als oder gleich 30 kg/m² aufweist, und wobei die genannte Unterschicht (402) eine Dicke größer als oder gleich 3 mm und kleiner als oder gleich 30 mm aufweist.

7. Herstellungsverfahren einer Kunstrasenoberfläche (400), wobei das Verfahren umfasst:
- Bereitstellen (20; 30) von Reststücken (1) aus natürlichem Leder;
- Zerkleinern (21; 32) der genannten Reststücke (1) aus natürlichem Leder zur Gewinnung der genannten Granulatkörner (201), die vollständig aus natürlichem Leder bestehen;
- Verlegen einer Kunstrasenmatte (100);
- Herstellen einer Verfüllschicht (200) über der genannten Kunstrasenmatte (100), wobei die genannte Verfüllschicht (200) eine Oberschicht (403) umfasst, die die genannten Granulatkörner (201) umfasst.

8. Verfahren gemäß Anspruch 7, wobei die genannten Reststücke industrielle Reststücke sind, ausgewählt aus der Gruppe umfassend: Abschnitte aus natürlichem Leder, nichtkonforme Produktionschargen aus natürlichem Leder, Stücke aus natürlichem Leder, zurückgewonnen aus Altartikeln, oder Kombinationen davon, und wobei die genannten Reststücke stammen aus einem oder mehreren der folgenden Bereiche: Gerbereisektor, Automobilsektor, Bekleidungs- und Modeaccessoire-Sektor, Schuhsektor.

9. Verfahren gemäß Anspruch 7 oder 8, wobei das genannte natürliche Leder gegerbtes Leder ist.

10. Verfahren gemäß Anspruch 9, wobei das Bereitstellen der genannten Reststücke (1) aus gegerbtem natürlichem Leder das Gerben von rohem natürlichem Leder mit einem Gerbmittel umfasst, ausgewählt aus: pflanzliche Gerbstoffe, Aldehyde, synthetische Gerbstoffe, Schwefelchloride, Harze, Öle, Mineralien oder Kombinationen davon, vorzugsweise Glutaraldehyd.

11. Verfahren gemäß Anspruch 9 oder 10, wobei das Bereitstellen der genannten Reststücke (1) aus gegerbtem natürlichem Leder das Bereitstellen von Reststücken aus nassem natürlichem Leder umfasst, wobei das genannte gegerbte natürliche Leder keinem Färbeprozess unterzogen wurde.

12. Verfahren gemäß Anspruch 11, umfassend:
- Trocknen (31) der genannten Reststücke aus nassem natürlichem Leder, wobei das genannte Zerkleinern (32) das Zerkleinern der genannten Reststücke aus getrocknetem natürlichem Leder umfasst,
oder wobei das genannte Zerkleinern (32) das Zerkleinern der genannten Reststücke aus nassem natürlichem Leder umfasst, und wobei das Verfahren ferner nach dem genannten Zerkleinern das Trocknen der genannten Reststücke aus nassem natürlichem Leder umfasst.

13. Verfahren gemäß einem der Ansprüche 7 bis 12, umfassend, nach dem genannten Zerkleinern (32):
- Entstauben (33) der genannten zerkleinerten Reststücke; und
- anschließend Siebung (34) der genannten zerkleinerten und entstaubten Reststücke zur Gewinnung der genannten Granulatkörner (201).

14. Verfahren gemäß einem der Ansprüche 7 bis 13, wobei das Herstellen der genannten Verfüllschicht (200) umfasst:
- Anordnen weiterer Granulatkörner aus einem anderen Material als dem genannten natürlichen Leder über der genannten Kunstrasenmatte (100) zum Herstellen einer Unterschicht (402) der genannten Verfüllschicht (200); und
- Anordnen der genannten Granulatkörner (201) über den genannten weiteren Granulatkörnern zum Herstellen der genannten Oberschicht (403).

## Revendications

1. Surface de gazon synthétique (400) comprenant un tapis de gazon synthétique (100) et une couche de remplissage (200) disposée au-dessus dudit tapis de gazon synthétique (100), **caractérisée en ce que** ladite couche de remplissage (200) comprend une couche supérieure (403) comprenant des granulés (201) entièrement constitués de cuir naturel.

2. Surface (400) selon la revendication 1, dans laquelle ledit cuir naturel est un cuir tanné.

3. Surface (400) selon la revendication 1 ou 2, dans laquelle ladite couche supérieure (403) est entièrement constituée desdits granulés (201).

4. Surface (400) selon la revendication 1 ou 2, dans laquelle ladite couche supérieure (403) est entièrement composée d'un mélange comprenant lesdits granulés (201) et un autre matériau granulaire de remplissage, autre que ledit cuir naturel, une teneur en poids desdits granulés (201) dans ladite couche supérieure (403) étant supérieure ou égale à 20 % et inférieure ou égale à 90 %.

5. Surface (400) selon l'une quelconque des revendications précédentes, dans laquelle lesdits granulés (201) ont une taille de tamis supérieure ou égale à 0,3 mm et inférieure ou égale à 3,5 mm, dans laquelle ladite couche supérieure (403) a une masse surfacique supérieure ou égale à 1 kg/m² et inférieure ou égale à 10 kg/m², et dans laquelle ladite couche supérieure (403) a une épaisseur supérieure ou égale à 5 mm et inférieure ou égale à 35 mm.

6. Surface (400) selon l'une quelconque des revendications précédentes, dans laquelle ladite couche de remplissage (200) comprend une couche inférieure (402) disposée sous ladite couche supérieure (403), ladite couche inférieure (402) comprenant d'autres granulés entièrement composés de : sable, matériau végétal, ou des combinaisons de ceux-ci, ladite couche inférieure (402) ayant une masse surfacique supérieure ou égale à 8 kg/m² et inférieure ou égale à 30 kg/m², et ladite couche inférieure (402) ayant une épaisseur supérieure ou égale à 3 mm et inférieure ou égale à 30 mm.

7. Procédé de fabrication d'une surface de gazon synthétique (400), dans lequel le procédé comprend :
- la fourniture (20 ; 30) de chutes (1) de cuir naturel ;
- le broyage (21 ; 32) desdites chutes (1) de cuir naturel pour obtenir lesdites granules (201) entièrement composées de cuir naturel ;
- la pose d'un tapis de gazon synthétique (100) ;
- la réalisation d'une couche de remplissage (200) au-dessus dudit tapis de gazon synthétique (100), ladite couche de remplissage (200) comprenant une couche supérieure (403) comprenant lesdites granules (201).

8. Procédé selon la revendication 7, dans lequel lesdites chutes sont des chutes industrielles sélectionnées dans le groupe comprenant : des chutes de cuir naturel, des lots de production non conformes de cuir naturel, des chutes de cuir naturel récupérées à partir d'articles en fin de vie, ou des combinaisons de ceux-ci, et dans lequel lesdites chutes proviennent d'un ou plusieurs des secteurs suivants : secteur de la tannage, secteur automobile, secteur de l'habillement et des accessoires de mode, secteur de la chaussure.

9. Procédé selon la revendication 7 ou 8, dans lequel ledit cuir naturel est du cuir tanné.

10. Procédé selon la revendication 9, dans lequel la fourniture desdites chutes (1) de cuir naturel tanné comprend le tannage du cuir naturel brut avec un agent de tannage choisi parmi : tannins végétaux, aldéhydes, tannins synthétiques, sulfures-chlorures, résines, huiles, minéraux, ou des combinaisons de ceux-ci, de préférence la glutaraldéhyde.

11. Procédé selon la revendication 9 ou 10, dans lequel la fourniture des chutes (1) de cuir naturel tanné comprend la fourniture de chutes de cuir naturel humide, ledit cuir naturel tanné n'ayant subi aucun processus de teinture.

12. Procédé selon la revendication 11, comprenant :
- le séchage (31) desdites chutes de cuir naturel humide, où le broyage (32) comprend le broyage desdites chutes de cuir naturel sec,
ou bien où le broyage (32) comprend le broyage desdites chutes de cuir naturel humide, et dans lequel le procédé comprend en outre, après le broyage, le séchage desdites chutes de cuir naturel humide.

13. Procédé selon l'une quelconque des revendications 7 à 12, comprenant, après ledit broyage (32) :
- l'élimination de la poussière (33) des chutes broyées ; et
- ensuite, le tamisage (34) des chutes broyées et débarrassées de poussière afin d'obtenir lesdits granulés (201).

14. Procédé selon l'une quelconque des revendications 7 à 13, dans lequel la formation de ladite couche de remplissage (200) comprend :
- la disposition de granulés supplémentaires fabriqués à partir d'un matériau différent dudit cuir naturel sur le tapis synthétique (100) afin de former une couche inférieure (402) de ladite couche de remplissage (200) ; et
- la disposition desdits granulés (201) au-dessus desdits granulés supplémentaires pour former ladite couche supérieure (403).
